Europäisches Patentamt

European Patent Office

Office européen des brevets

(11) Veröffentlichungsnummer: **0 023 960**
**B1**

## (12) EUROPÄISCHE PATENTSCHRIFT

(45) Veröffentlichungstag der Patentschrift:
**18.05.83**

(51) Int. Cl.³: **F 02 P 5/04**

(21) Anmeldenummer: **80103470.3**

(22) Anmeldetag: **21.06.80**

(54) **Elektronische Zündvorrichtung für eine Brennkraftmaschine.**

(30) Priorität: **09.08.79 DE 2932230**

(43) Veröffentlichungstag der Anmeldung:
**18.02.81 Patentblatt 81/7**

(45) Bekanntmachung des Hinweises auf die Patenterteilung:
**18.05.83 Patentblatt 83/20**

(84) Benannte Vertragsstaaten:
**FR GB IT SE**

(56) Entgegenhaltungen:
**DE-B-2 634 239**
**FR-A-2 384 386**

**„Elektronik", Nr. 9, 1977, München, G. Klasche, „Digital gesteuertes Motor-Zündsystem", S. 64 bis 68.**

(73) Patentinhaber: **AUDI NSU AUTO UNION Aktiengesellschaft, Postfach 220 Ettingerstrasse, D-8070 Ingolstadt (DE)**

(72) Erfinder: **Köhler, Karl-Heinz, Max-Schott-Strasse 34, D-8070 Ingolstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Elektronische Zündvorrichtung für eine Brennkraftmaschine

Die Erfindung betrifft eine elektronische Zündvorrichtung für eine Brennkraftmaschine.

Für den optimierten Betrieb einer fremdgezündeten Brennkraftmaschine ist der jeweilige Zündzeitpunkt in Abhängigkeit wechselnder Betriebsbedingungen einzustellen und zu verändern. Die dafür zur Zeit hauptsächlich noch verwendeten mechanischen Systeme arbeiten meistens mit Fliehgewichten zur Drehzahlanpassung und Unterdruckdosen zur Lastanpassung. Diese Systeme sind relativ ungenau und träge und werden in zunehmendem Masse durch schnelle, genaue und eine Vielzahl von Informationen verarbeitende elektronische Zündvorrichtungen ersetzt.

Es ist nun bekannt (Zeitschrift „Elektronik", 1977, Heft 9, S. 64-68), für die Verstellung des Zündzeitpunktes ein elektronisches Zündverstellsystem zu verwenden, das einen Auslösezähler und einen über ein Zeitglied abrufbaren Nebenzähler enthält. Der Nebenzähler zählt über eine bestimmte Messzeit Impulse, die von den Zähnen der Schwungscheibe abgegriffen werden. Der Zählerstand am Ende einer Messzeit entspricht somit der jeweiligen Drehzahl. Diese Drehzahlinformation wird entweder direkt oder über ein programmierbares Glied als Voreinstellung dem Auslösezähler zugeführt. Der Auslösezähler zählt von einem einer bestimmten Kurbelwellenstellung entsprechenden Synchronisierimpuls an, beginnend mit dem Wert der Voreinstellung, die einlaufenden Impulse, die von den Zähnen der Schwungscheibe abgegriffen werden. Beim Erreichen eines bestimmten vorgegebenen Zählerstandes gibt der Auslösezähler einen Steuerimpuls an die Zündspannungserzeugung ab. Durch die Veränderung der eingegebenen Voreinstellung wird der Zeitpunkt der Zündimpulsabgabe bezüglich des Synchronisierimpulses verändert und an die Drehzahl und mögliche andere Parameter, wie beispielsweise Unterdruck und Temperatur, abgepasst. Wenn nun der erste Zylinder gezündet wurde, zählt der Auslösezähler bis zur nächsten Impulsabgabe die Hälfte der Zähnezahl der Schwungscheibe weiter, was dem Zündzeitpunkt des um 180° KW versetzten, zweiten Zylinders entspricht. Vor dem Zünden des dritten Zylinders wird bereits ein neuer Synchronisierimpuls erzeugt, der den Auslösezähler auf die entsprechende Voreinstellung zurücksetzt und den Vorgang erneut anlaufen lässt.

Das beschriebene System hat die Eigenart, dass es nur schwierig und mit weiteren Bauteilen an eine Brennkraftmaschine mit ungerader Zylinderzahl oder an unsymmetrische Motoren anpassbar ist. Bestimmte, feste Tastverhältnisse des Steuersignalpegels für die Ansteuerung nachgeschalteter Hybridschaltungen zur Hochspannungserzeugung werden von der beschriebenen Schaltung nicht geliefert.

Aufgabe der Erfindung ist es, eine gattungsgemässe elektronische Zündvorrichtung so auszubilden, dass sie an möglichst viele Ausführungsformen von Brennkraftmaschinen leicht anpassbar ist und mit weiteren Systemen an der Brennkraftmaschine einfach zusammenarbeitet.

Die Aufgabe wird mit den kennzeichnenden Merkmalen des Patentanspruchs 1 gelöst.

Einem Zähler werden als Startimpuls alle 720°-KW-Umdrehung Referenzimpulse zugeführt. Der Zähler beginnt dann, von einem ihm eingegebenen Wert (Voreinstellung) bis zu einem bestimmten vorher festgelegten Zählerendwert ihm zugeführte Winkelimpulse entsprechend der Drehung der Kurbelwelle zu zählen. Nach Erreichen dieses Wertes gibt der Zähler ein Signal ab, das seinem Starteingang zugeführt wird und somit den Zählvorgang von der jeweiligen Voreinstellung beginnend wieder in Gang setzt. Die Voreinstellung und der festgelegte Wert werden so gewählt, dass der Zähler den Zählvorgang zwischen zwei Referenzimpulsen so oft wiederholt, als Kolbenzylindereinheiten der Brennkraftmaschine vorhanden sind. Der jeweilige Inhalt des Zählers wird sowohl einer Drehzahlmesseinrichtung mit einem Zeitglied als auch einem Komparator zugeführt. Das Messzeitglied wird mit dem Anlaufen des Zählers synchronisiert, so dass nach einer bestimmten Messzeit der Zählerstand ein Mass für die Drehzahl darstellt. Die gewonnene Information über die augenblickliche Drehzahl wird einer Soll-Zündwinkel-Einrichtung zugeführt, die diese Information und in der Regel eine Reihe anderer zugeführter Betriebsparameter (z.B. Temperatur, Saugrohrdruck) verarbeitet und ein Soll-Zündwinkel-Signal (digitale Information, nach wievielen Zähnen nach dem Referenzimpuls die Zündung erfolgen soll) an den anderen Eingang des Komparators abgibt. Wenn der Zählerstand des immer wieder durchzählenden Zählers den Wert des Soll-Zündwinkel-Signals erreicht hat, erzeugt der Komparator ein Steuersignal zur Ansteuerung der Hochspannungserzeugung für die Zündimpulse. Dadurch wird erreicht, dass die elektronische Zündvorrichtung alleine durch Veränderung der Voreinstellung und/oder des vorgegebenen Zählerendwertes am Zähler an Brennkraftmaschinen mit unterschiedlicher Zylinderzahl einfach anpassbar ist. Das jeweils beim Erreichen des Zählerendwertes am Zähler erzeugte Signal kann als Referenzsignal, für die Ansteuerung von weiteren Einrichtungen an der Brennkraftmaschine, beispielsweise einer Einspritzanlage, mitverwendet werden. Dieses Signal könnte z.B. für jeden Zylinder in seiner oberen Totpunktlage erzeugt werden.

Bei einer Auslegung der Voreinstellung und des festgelegten· Zählerstandes gemäss Patentanspruch 2 wird die Zündung bei einem symmetrischen Motor an jedem Zylinder durch die Soll-Zündwinkel-Einrichtung um den gleichen Wert verstellt.

Mit den Merkmalen des Patentanspruches 2 wird erreicht, dass bei unsymmetrischen Motoren, bei denen eine bestimmte Zylindereinstellung, beispielsweise die obere Totpunktstellung, von den einzelnen Zylindern nicht nach gleichen Drehwin-

keln eingenommen wird, der Zündwinkel jedes einzelnen Zylinders noch gegenüber dem Wert, den die Soll-Zündwinkel-Einrichtung vorgibt, durch Verändern der jeweiligen Voreinstellung beeinflussbar ist. Bei der Verwendung eines Klopfsensors an einer Brennkraftmaschine besteht mit den Merkmalen des Anspruchs 2 die Möglichkeit, bei den einzelnen Zylindern unterschiedlich den Zündwinkel zu verändern und z.B. erst nur an dem am ehesten zum Klopfen neigenden Zylinder die Zündung in Richtung Spät zu verstellen.

Mit den Merkmalen des Patentanspruchs 4 wird ebenfalls erreicht, dass der Zündwinkel jedes einzelnen Zylinders durch die Soll-Zündwinkel-Einrichtung unterschiedlich veränderbar ist.

Für die Ansteuerung bestimmter Hochspannungserzeuger (Zündspannungshybriden) ist es erforderlich, ein bestimmtes Tastverhältnis des Ansteuersignals zwischen H- und L-Pegel bereitzustellen, um die Erzeugung der Hochspannung sowohl bei niederen als auch bei hohen Drehzahlen sicherzustellen. Durch die Verwendung eines Addierwerkes mit Voreinstellung gemäss Patentanspruch 5 kann dieses Tastverhältnis erzeugt und verändert werden.

Anhand eines Ausführungsbeispiels wird die Erfindung beispielhaft und mit weiteren Einzelheiten beschrieben.

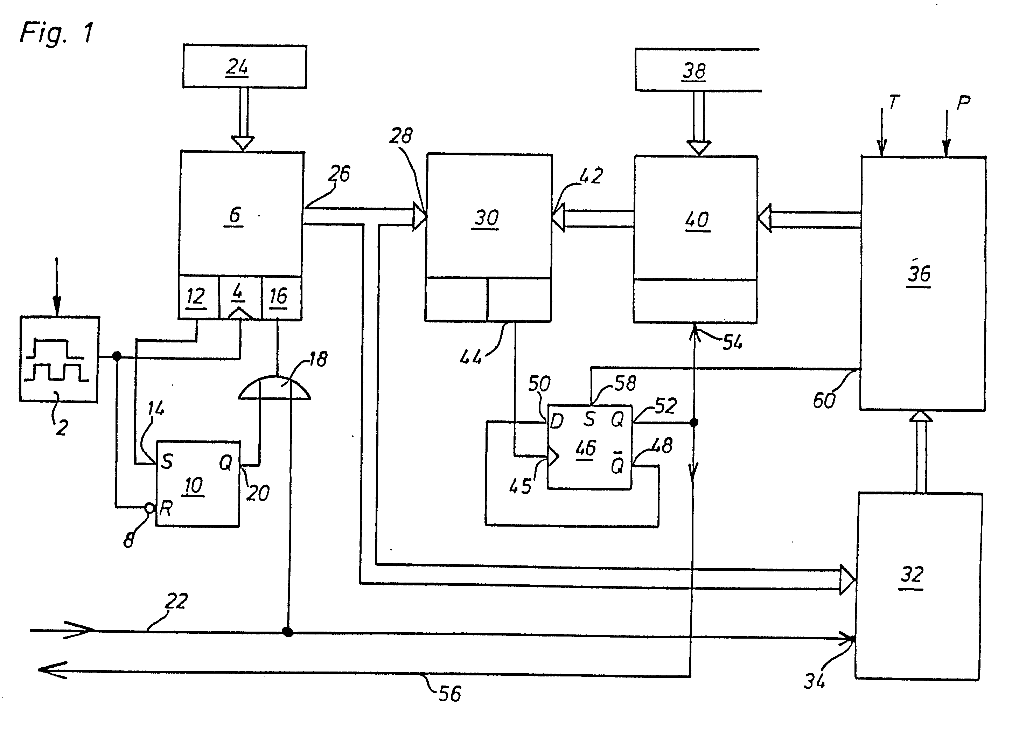

Fig. 1 zeigt das Blockschaltbild einer elektronischen Zündvorrichtung,

Fig. 2 zeigt die in der Schaltung vorkommenden Impulsdiagramme.

Eine Impulsverdopplungsschaltung 2 ist mit dem Zähleingang 4 eines Vorwärtszählers 6 und dem Rücksetzeingang 8 eines RS-Flip-Flops 10 verbunden. Der Signalausgang 12 des Vorwärtszählers 6 ist mit dem Setzeingang 14 des RS-Flip-Flops 10 zusammengeschaltet. Der Starteingang 16 des Vorwärtszählers 6 ist über ein ODER-Glied 18 mit dem Ausgang 20 des RS-Flip-Flops 10 zusammengeschaltet. Der Starteingang 16 des Vorwärtszählers 6 ist über ein ODER-Glied 18 mit dem Ausgang 20 des RS-Flip-Flops 10 und einer Referenzimpulsleitung 22 verbunden. Eine einen bestimmten Wert vorgebende Voreinstellung 24 ist dem Vorwärtszähler 6 vorgeschaltet. Der Zählausgang 26 des Vorwärtszählers 6 hat Verbindung mit dem ersten Eingang 28 eines Komparators 30 und mit einer Drehzahlmesseinrichtung 32. Die Referenzimpulsleitung 22 liegt am Starteingang 34 der Drehzahlmesseinrichtung 32, deren Ausgangswert einer Soll-Zündwinkel-Einrichtung 36 zugeführt ist. Der Ausgangswert der Soll-Zündwinkel-Einrichtung 36 liegt über ein mit einer Voreinstellung 38 versehenes Addierwerk 40 am zweiten Eingang 42 des Komparators 30 an. Der Ausgang 44 des Komparators 30, der bei Gleichheit der Werte am ersten Eingang 28 und zweiten Eingang 42 ein Signal abgibt, ist mit dem Impulseingang 45 eines D-Flip-Flops 46 verbunden. Der Ausgang 48 ($\bar{Q}$) und der Eingang 50 (D) sind miteinander verbunden. Dem Ausgang 52 (Q) nachgeschaltet sind der Eingang 54 des Addierwerks 40 und die Zündsteuerleitung 56, die zur nicht dargestellten Hochspannungserzeugung führt. Der statische Eingang 58 des D-Flip-Flops 46 ist mit einem Ausgang 60 der Soll-Zündwinkel-Einrichtung zusammengeschaltet.

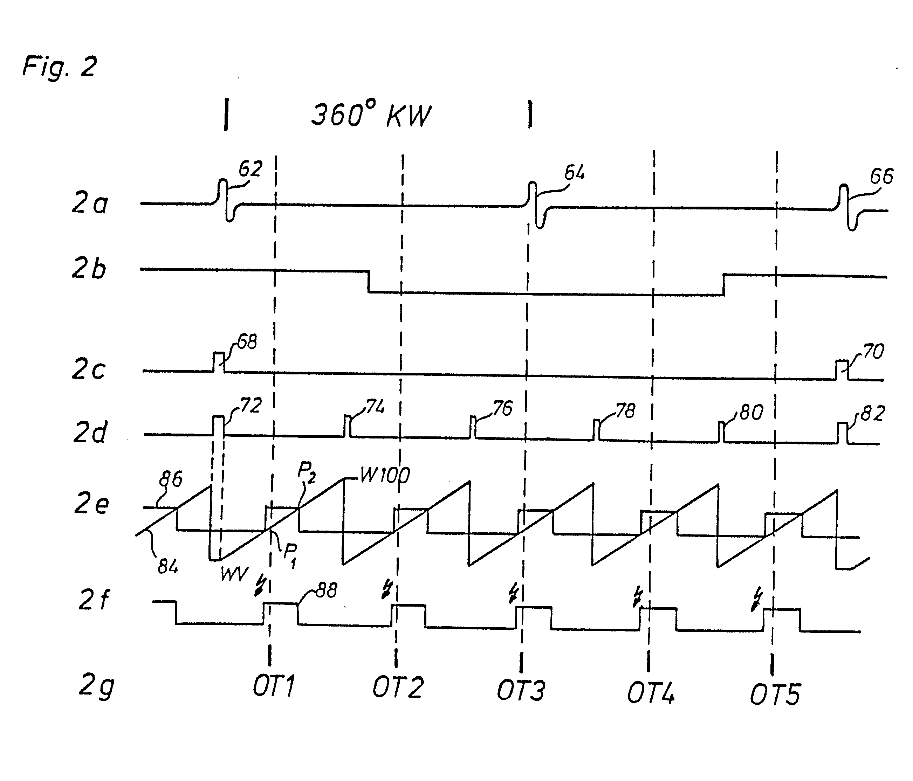

In Fig. 2 sind die Impulsdiagramme gezeichnet, die beim Betrieb eines symmetrisch aufgebauten 5-Zylinder-Motors auftreten. Im Diagramm 2a sind die Impulse dargestellt, wie sie von einem induktiven Impulsaufnehmer an einer mit einer Markierung versehenen und mit der Kurbelwelle verbundenen Schwungscheibe abgegeben werden (Kurbelwellenimpulse 62, 64, 66). Im Diagramm 2b ist ein Signal dargestellt, das in der Regel von der Nockenwelle bzw. dem Zündverteiler abgegriffen wird und so verläuft, dass jeder zweite Kurbelwellenimpuls, im gezeichneten Beispiel der Kurbelwellenimpuls 64, mit einem L-Pegel zusammenfällt. Die Signale aus den Diagrammen 2a und 2b werden in bekannter Weise einem UND-Glied und einer Impulsformerstufe zugeführt, so dass die im Diagramm 2c dargestellten Referenzimpulse 68 und 70 entstehen, wobei jeder zweite Kurbelwellenimpuls 64 ausgeblendet ist. Die im Diagramm 2d gezeichneten Impulse treten am Starteingang 16 des Vorwärtszählers 6 auf. Die Sägezahnkurve 84 im Diagramm 2e entspricht einer analogen Darstellung des digitalen Wertes am Zählausgang 26 des Vorwärtszählers 6. Die Stufenfunktion 86 im gleichen Diagramm entspricht der analogen Darstellung des digitalen Eingangswertes am zweiten Eingang 42 des Komparators 30. Die im Diagramm 2f dargestellten Impulse treten in der Zündsteuerleitung 56 auf. In der Zeile 2g sind die Lagen der oberen Totpunkte der einzelnen Zylinder bezeichnet.

Die beschriebene Schaltung hat folgende Funktion:

Beim Auftreten eines Referenzimpulses in der Referenzimpulsleitung 22, beispielsweise des Referenzimpulses 68 aus dem Diagramm 2c, schaltet das ODER-Glied 18 durch und der Referenzimpuls 68 gelangt an den Starteingang 16 des Vorwärtszählers 6. Dieser beginnt von einem durch die Voreinstellung 24 dem Zähler eingegebenen Voreinstellungswert an zu zählen. Gezählt werden die von der Impulsverdopplungsschaltung 2 verdoppelten Impulse, die durch induktive Abtastung der Zähne des Zahnkranzes an der Schwungscheibe erhalten werden und dem Zähleingang 4 zugeführt werden.

Der Vorwärtszähler 6 zählt so lange aufwärts, bis ein bestimmter festgelegter Zählerendwert, in unserem Beispiel der Wert 100, erreicht ist. Beim Erreichen des Wertes 100 gibt der Zähler am Signalausgang 12 ein Impulssignal entsprechend dem Signal 74 im Diagramm 2d ab, das über den Setzeingang 14 und den Ausgang 20 des RS-Flip-Flops 10 und über das ODER-Glied 18 wieder dem Starteingang 16 des Vorwärtszählers 6 zugeführt wird. Der Zähler wird damit wieder auf den Voreinstellungswert zurückgesetzt und beginnt sofort erneut nach oben zu zählen.

Das RS-Flip-Flop 10 wird durch einen nachfolgenden Impuls aus der Impulsverdopplungsschaltung 2 über den Rücksetzeingang 8 sofort wieder zurückgesetzt. Das RS-Flip-Flop ist erforderlich, um eine kleine Zeitverzögerung zwischen dem Auftreten des Signals am Signalausgang 12 und dem erneuten Start über den Starteingang 16 zu erhalten.

Am Zählausgang 26 des Vorwärtszählers 6 steht somit ein digitaler Wert an, der den Werten der Sägezahnkurve 84 aus dem Diagramm 2e entspricht.

Dieser Wert wird einmal dem ersten Eingang des Komparators 30 und zugleich dem Eingang der Drehzahlmesseinrichtung 32 zugeführt. Die Drehzahlmesseinrichtung 32 enthält ein Zeitglied, das durch die Referenzimpulse 68, 70 jeweils gestartet wird und nach einer vorbestimmten Zeit den Zählerstand des Vorwärtszählers 6 abliest. Der in der Zeit angelaufene Zählerstand ist dann ein Mass für die jeweilige Drehzahl. Das Zeitintervall muss wegen der eindeutigen Zuordnung eines bestimmten Zählerstandes zu einer bestimmten Drehzahl so gewählt werden, dass der Zählerstand immer im ersten ansteigenden Sägezahnbereich nach einem Referenzimpuls abgelesen wird. Wenn dadurch die Auflösung der Drehzahlmessung durch eine zu kleine Anzahl eingezählter Impulse vom Zahnkreuz des Schwungrades zu gering ist, kann das Messzeitintervall vergrössert werden und durch Mitverwendung der Zwischenimpulse 74, 76, 78, 80 jeweils bestimmt werden, in welchem Sägezahnbereich der Zählerstand abgelesen wird. Dadurch wird wieder eine eindeutige Zuordnung eines bestimmten Zählerstandes zu einer bestimmten Drehzahl erhalten. Ein der jeweiligen Drehzahl entsprechender Wert wird der Soll-Zündwinkel-Einrichtung 36 zugeführt, die einen entsprechenden Soll-Zündwinkel-Wert, der zusätzlich von weiteren Parametern, beispielsweise der Temperatur und dem Saugrohrdruck, abhängen kann, an ihrem Ausgang zur Verfügung stellt. Dieser Wert geht vorerst unbeeinflusst vom Addierwerk 40 auf den zweiten Eingang 42 des Komparators 30. Wenn nun der ansteigende Zählwert des Vorwärtszählers 6 den gleichen Wert erreicht hat, soll die Zündung bei dieser entsprechenden Kolbenstellung erfolgen und am Ausgang 44 des Komparators 30 wird ein Zündsteuersignal abgegeben. Im Diagramm 2e wird die Gleichheit des Zählerstandes und des vorgegebenen Soll-Zündwinkel-Wertes am Punkt P1 erreicht und die Zündung an der unter P1 liegenden ansteigenden Rampe im Diagramm 2f eingeleitet. Es ist nun ohne weiteres aus dem Diagramm 2e zu ersehen, dass bei einer Veränderung des Soll-Zündwinkel-Wertes der Punkt P1 auf der ansteigenden Flanke der Sägezahnkurve 84 wandert und damit der am Punkt P1 erzeugte Zündimpuls gegenüber dem jeweiligen oberen Totpunkt des entsprechenden Zylinders in Richtung Früh- oder Spätzündung verschiebbar ist. Die in dem Ausführungsbeispiel angeschlossene, nicht gezeichnete, Hochspannungseinrichtung (Zündspannungshybrid) erfordert für ihre richtige Funktion bei hohen und niederen Drehzahlen ein genau festgelegtes Tastverhältnis zwischen H- und L-Pegel des Steuersignals. Das Zündimpulssignal aus dem Komparator 30 wird daher dem D-Flip-Flop 46 zugeführt, das dadurch an seinem Ausgang 52, der mit der Zündsteuerleitung 56 und dem Steuereingang 54 des Addierwerks verbunden ist, H-Signal annimmt (Diagramm 2f). Dadurch wird sowohl die Zündung eingeleitet als auch das Addierwerk 40 aktiviert, das einen seiner Voreinstellung 38 entsprechenden Wert zu dem Soll-Zündwinkel-Wert addiert und nun diesen vergrösserten Wert dem zweiten Eingang 42 des Komparators 30 zuführt. Der Komparator stellt dann erneut Gleichheit zwischen dem um die Voreinstellung des Addierwerks erhöhten Soll-Zündwinkel-Wert und dem Zählerstand des Vorwärtszählers 6 am Punkt P2 des Diagramms 2e fest und gibt an seinem Ausgang 44 wiederum ein Signal ab. Dadurch geht der Ausgang 52 des D-Flip-Flops 46 auf L-Signal, bis erneut ein Impuls am Impulseingang 45 auftritt. Durch die fest vorgegebene Voreinstellung des Addierwerks 40 wird dadurch unabhängig von der Zeit und Drehzahl ein festes Tastverhältnis zwischen H- und L-Signal des Zündsteuersignals (Diagramm 2f) erreicht. Die Soll-Zündwinkel-Einrichtung 36 kann über den statischen Eingang 58 des D-Flip-Flops 46 die Zündspule bei zu geringer Drehzahl stromlos schalten, um die Leistungsstufe vor Überlastung, insbesondere bei Stillstand des Motors, zu schützen.

Die Soll-Zündwinkel-Einrichtung kann als programmierbare Matrix- oder als Mikroprozessor ausgeführt sein. Dabei werden für unterschiedliche Eingangswerte der Drehzahl und anderer Parameter Werte bzw. Programme angewählt, welche einen geeigneten Zündwinkel festlegen bzw. errechnen. Bei einem geeigneten Mikroprozessor ist es auch möglich, die Drehzahlmesseinrichtung 32 dem Mikroprozessor zuzuordnen und die Drehzahlmessung von diesem intern durchführen zu lassen.

Bei Verwendung eines Mikroprozessors besteht sehr einfach die Möglichkeit, den Zündwinkel für jeden einzelnen Zylinder bei sonst gleichen Eingangsparametern getrennt zu berechnen und möglicherweise unterschiedlich festzulegen, z.B. bei erhöhter Klopfneigung eines Zylinders nur an diesem Zylinder die Vorzündung zurückzunehmen. Dazu wird der Starteingang 16 des Vorwärtszählers 6, an dem die Referenzimpulse 72, 82 und Zwischenimpulse 74, 76, 78, 80 aus dem Diagramm 2d auftreten, mit dem Mikroprozessor (Soll-Zündwinkel-Einrichtung 36 und Drehzahlmesseinrichtung 32) verbunden. Durch Synchronisation über die Referenzimpulsleitung 22 und durch Mitzählen der Zwischenimpulse 74, 76, 78, 80 erhält der Mikroprozessor jeweils die Information, welche Zündung an welchem Zylinder gerade ansteht. Der Mikroprozessor kann dann entsprechend den Vorgaben seinen am Komparator 30 anliegenden Ausgangswert ändern oder über eine Verbindung mit der Voreinstellung 24 des Vorwärtszählers 6 diese jeweils ändern und dadurch den Zündzeitpunkt jedes einzelnen Zylinders getrennt festlegen.

## Patentansprüche

1. Elektronische Zündvorrichtung für eine Brennkraftmaschine mit einer bestimmten Anzahl von Kolbenzylindereinheiten,

— mit einem Zähler (6), dessen Zählbeginn von einem Referenzimpuls (22), der einer bestimmten Stellung der Kolben der Brennkraftmaschine entspricht, gestartet wird und der Winkelimpulse entsprechend der Drehung der Kurbelwelle der Brennkraftmaschine zählt,

— mit einer Voreinstellung (24) für den Zähler (6), von deren Wert aus der Zähler (6) die Winkelimpulse dazuzählt, bis er nach dem Erreichen eines festgelegten Zählerstandes (Zählerendwert) an seinem Signalausgang (12) ein Signal abgibt,

— mit einer Drehzahlmesseinrichtung (32) mit einem Messzeitglied zur Drehzahlbestimmung der Brennkraftmaschine,

— mit einer Soll-Zündwinkel-Einrichtung (36), die aus ihr zugeführten Betriebsparametern, u.a. der Drehzahl, den für den jeweiligen Betriebszustand geeigneten Soll-Zündwinkel ermittelt und als Soll-Zündsignal abgibt, dadurch gekennzeichnet,

— dass der Signalausgang (12) des Zählers (6) mit seinem Starteingang (16) verbunden ist,

— dass die Voreinstellung (24) und/oder der Zählerendwert so gewählt sind, dass zwischen zwei Referenzimpulsen (68, 70) eine der um 1 verminderten Anzahl der Kolbenzylindereinheiten entsprechende Anzahl von Signalen (74, 76, 78, 80) am Signalausgang (12) des Zählers (6) abgegeben wird,

— dass mit dem Zählerausgang (26) des Zählers (6), an dem sein jeweiliger Zählerstand ausgelesen werden kann, der eine Eingang (28),

— eines Komparators (30), und

— die Drehzahlmesseinrichtung (32) verbunden sind,

— dass das Messzeitglied der Drehzahlmesseinrichtung (32) mit der Referenzimpulsleitung (22) verbunden ist,

— dass der zweite Eingang (42) des Komparators (30) mit der Soll-Zündwinkel-Einrichtung (32) verbunden ist, und

— dass der Ausgang (44) des Komparators (30) mit der Hochspannungserzeugung für die Zündimpulse verbunden ist und bei Gleichheit der den beiden Komparatoreingängen (28, 42) zugeführten Werte ein Steuersignal (88) abgibt.

2. Elektronische Zündvorrichtung nach Patentanspruch 1, dadurch gekennzeichnet, dass die Voreinstellung (24) fest gewählt ist, so dass die Differenz zwischen Voreinstellung (24) und festgelegtem Zählerstand (Zählerendwert), an dem der Zähler ein Signal abgibt, multipliziert mit der Anzahl der Zylinder der Brennkraftmaschine, gleich dem Wert der gezählten Winkelimpulse zwischen zwei Referenzimpulsen (68, 70) ist.

3. Elektronische Zündvorrichtung nach Patentanspruch 1, dadurch gekennzeichnet, dass die Voreinstellung (24) zwischen zwei Referenzimpulsen (68, 70) veränderlich ist.

4. Elektronische Zündvorrichtung nach einem der beiden Patentansprüche 1 oder 2, dadurch gekennzeichnet, dass der Signalausgang (12) des Zählers (6) mit der Soll-Zündwinkel-Einrichtung (36) verbunden ist und die Soll-Zündwinkel-Einrichtung (36) in Abhängigkeit der einlaufenden Signale vom Zähler (6) ihr abgegebenes Soll-Zündwinkel-Signal verändert.

5. Elektronische Zündvorrichtung nach einem der Patentansprüche 1 bis 4, dadurch gekennzeichnet, dass zwischen dem zweiten Eingang (42) des Komparators (30) und der Soll-Zündwinkel-Einrichtung (36) ein Addierwerk (40) und zwischen dem Ausgang (44) des Komparators (30) und der Hochspannungserzeugung ein Flip-Flop (D-Flip-Flop 46) angeordnet ist, und der Ausgang des Flip-Flops (46) mit dem Steuereingang (54) des Addierwerkes (40) und der Hochspannungserzeugung verbunden ist, wobei ein am Addierwerk (40) voreingestellter Wert (Voreinstellung 38) dem Wert aus der Soll-Zündwinkel-Einrichtung nach Abgabe des Steuersignals vom Komparator zugezählt wird und das bei erneuter Gleichheit der den beiden Komparatoreingängen zugeführten Werte erzeugte Steuersignal den Ausgangszustand des Flip-Flops (46) verändert.

## Claims

1. Electronic ignition device for an internal-combustion engine having a specific number of piston-cylinder units, with a counter (6), the beginning of counting of which is started by a reference pulse (22) corresponding to a specific position of the pistons of the internal-combustion engine and which counts angular pulses corresponding to the rotation of the crank-shaft of the internal-combustion engine, with a presetting (24) for the counter (6) from the value of which the counter (6) counts the angular pulses until it transmits a signal at its signal output (12) after a fixed count (final counter value) has been reached, with a speed-measuring device (32) having a measuring-time element for determining the speed of the internal-combustion engine, and with a nominal ignition-angle device (36) which determines from operating parameters, among others the speed supplied to it, the nominal ignition angle suitable for the particular operating state and which transmits this as a nominal ignition signal, characterised in that the signal output (12) of the counter (6) is connected to its starting input (16), in that the presetting (24) and/or the final counter value are selected so that between two reference pulses (68, 70) a number of signals (74, 76, 78, 80) corresponding to the number of piston-cylinder units less one are transmitted at the signal output (12) of the counter (6), in that a first input (28) of a comparator (30) and the speed-measuring device (32) are connected to the counter output (26) of the counter (6) at which its particular count can be read out, in that the measuring-time element of the speed-measuring device (32) is connected to the reference-pulse line (22), in that the second input (42) of the comparator (30) is connected to the nominal ignition-angle device (32), and in that the output (44) of the comparator (30) is connected to the high-voltage generating source for the ignition pulses and transmits a control signal (88) when the values supplied to the two comparator inputs (28, 42) are identical.

2. Electronic ignition device according to claim 1, characterised in that the presetting is fixed so that the difference between the presetting (24) and the predetermined count (counter end value) at which the counter is generating a signal multiplied by the number of cylinders of the internal combustion engine is equal to the value of the angular pulses counted between two reference pulses (68, 70).

3. Electronic ignition device according to claim 1, characterised in that the presetting (24) is changeable between two reference pulses (68, 70).

4. Electronic ignition device according to claim 1 or 2, characterised in that the signal output (12) of the counter (6) is connected to the nominal ignition-angle device (36) and said nominal ignition-angle device (36) changes its nominal ignition-angle signal in dependance from the signals received from the counter (6).

5. Electronic ignition device according to one of the claims 1 to 4, characterised in that, between the second input (42) of the comparator (30) and the nominal ignition-angle device (36), there is disposed an adder means (40) and, between the output (44) of the comparator (30) and the high voltage generator, there is disposed a flip-flop (flip-flop D 46) the output of which is connected to the control input (54) of the adder (40) and the high voltage generator, a value (presetting 38) preset in the adder being added to the value of the nominal ignition-angle device after the output of the control signal of the comparator, and the generated control signal changing the output state of the flip-flop (46) when the two values input in the comparator are again equal.

## Revendications

1. Dispositif d'allumage électronique pour un moteur à combustion interne comportant un nombre déterminé d'ensembles cylindre-piston, comprenant un compteur (6) dont le comptage est lancé par une impulsion de référence (22) qui correspond à une position déterminée des pistons du moteur à combustion interne et qui compte des impulsions angulaires en proportion de la rotation du vilebrequin du moteur à combustion interne, un circuit de préréglage (24) pour le compteur, à partir de la valeur duquel le compteur (6) compte progressivement les impulsions angulaires jusqu'à ce que, après avoir atteint un état fixé (valeur finale du compteur), il délivre un signal à sa sortie de signal (12), un dispositif de mesure du nombre de tours (32) avec un organe de temps de mesure pour la détermination du nombre de tours du moteur à combustion interne, et un dispositif d'angle d'allumage de consigne (36) qui détermine, à partir de paramètres de fonctionnement qui lui sont fournis, et notamment à partir du nombre de tours, l'angle d'allumage de consigne qui convient dans les conditions instantanées de fonctionnement et qui fournit cet angle sous forme de signal d'allumage de consigne, caractérisé en ce que la sortie de signal (12) du compteur (6) est raccordée à son entrée de lancement (16), en ce que le préréglage (24) et/ou la valeur finale du compteur sont choisis de telle manière que, entre deux impulsions de référence (68, 70), il soit délivré, à la sortie de signal (12) du compteur (6), un nombre de signaux (74, 76, 78, 80) correspondant au nombre des ensembles cylindre-piston diminué de un, en ce que sont raccordés, à la sortie de comptage (26) du compteur (6) sur laquelle peut être lu l'état instantané de ce dernier, l'une des entrées (28) d'un comparateur (30) et le dispositif de mesure du nombre de tours (32), en ce que l'organe de temps de mesure du dispositif de mesure du nombre de tours (32) est raccordé à la ligne d'impulsions de référence (22), en ce que la seconde entrée (42) du comparateur (30) est raccordée au dispositif d'angle d'allumage de consigne (36), et en ce que la sortie (44) du comparateur (30) est raccordée au générateur de haute tension produisant les impulsions d'allumage et délivre un signal de commande (88) lorsque les valeurs fournies aux deux entrées (28, 42) du comparateur sont égales.

2. Dispositif d'allumage électronique selon la revendication 1, caractérisé en ce que le préréglage (24) est choisi de manière fixe, de telle sorte que la différence entre ce préréglage (24) et l'état fixé du compteur (valeur finale du compteur), dans lequel le compteur délivre un signal, multipliée par le nombre des cylindres du moteur à combustion interne soit égale à la valeur des impulsions angulaires comptées entre deux impulsions de référence (68, 70).

3. Dispositif d'allumage électronique selon la revendication 1, caractérisé en ce que le préréglage (24) est variable entre deux impulsions de référence (68, 70).

4. Dispositif d'allumage électronique selon la revendication 1 ou 2, caractérisé en ce que la sortie de signal (12) du compteur (6) est raccordée au dispositif d'angle d'allumage de consigne (36) et le dispositif d'angle d'allumage de consigne (36) fait varier le signal d'angle de consigne qu'il délivre en fonction des signaux qui lui arrivent en provenance du compteur (6).

5. Dispositif d'allumage électronique selon l'une quelconque des revendications 1 à 4, caractérisé en ce qu'il est monté, entre la seconde entrée (42) du comparateur (30) et le dispositif d'angle d'allumage de consigne (36), un additionneur (40) et, entre la sortie (44) du comparateur (30) et le générateur de haute tension, un multivibrateur bistable (multivibrateur bistable D 46) et en ce que la sortie du multivibrateur bistable (46) est raccordée à l'entrée de commande (54) de l'additionneur (40) et au générateur de haute tension, une valeur préréglée sur l'additionneur (préréglage 38) étant ajoutée à la valeur provenant du dispositif d'angle d'allumage de consigne après que le comparateur a délivré le signal de commande et le signal de commande produit lorsque les valeurs appliquées aux deux entrées du comparateur sont de nouveau égales, faisant varier l'état du signal de sortie du multivibrateur bistable (46).

Fig. 1

Fig. 2